# FASCICULE DE BREVET EUROPEEN

(11) **EP 2 601 008 B1**
(45) Date de publication et mention de la délivrance du brevet: **02.09.2015**
(21) Numéro de dépôt: 11752307.6
(22) Date de dépôt: 27.07.2011
(51) Int. Cl.: B23K 35/24, C22C 1/04, B23K 20/00, B23K 1/00, B23K 35/02, B23K 35/30

(54) **POUDRE COMPOSITE POUR L'ASSEMBLAGE OU LE RECHARGEMENT PAR BRASAGE-DIFFUSION DE PIÈCES EN SUPERALLIAGES**
VERBUNDPULVER ZUR MONTAGE ODER ERNEUERUNG VON DURCH DIFFUSIONSSCHWEISSUNG AUS EINER SUPERLEGIERUNG HERGESTELLTEN TEILEN
COMPOSITE POWDER FOR ASSEMBLING OR RESURFACING OF PARTS MADE OF A SUPERALLOY BY DIFFUSION WELDING

(30) Priorité: 02.08.2010 FR 1056393
(43) Date de publication de la demande: 12.06.2013
(73) Titulaire: Snecma, 75015 Paris (FR)
(72) Inventeur: CLEMENT, Jean-François, Didier, F-77550 Moissy Cramayel Cedex (FR)
(74) Mandataire: Robert, Mathias
(86) Numéro de dépôt international: PCT/FR2011/051811
(87) Numéro de publication internationale: WO 2012/017174

(56) Documents cités:
- WO-A1-00/27570
- WO-A2-2004/004953
- FR-A1- 2 296 491
- FR-A1- 2 511 908
- JP-A- 1 186 290
- US-A- 2 714 760
- US-A- 3 678 570
- US-A- 4 008 844
- US-A1- 2008 304 974
- US-B1- 6 325 871

## Description

La présente invention concerne une poudre composite pour l'assemblage ou le rechargement par brasage-diffusion de pièces en superalliage.

Le brasage est un procédé qui consiste le plus souvent à assembler deux pièces métalliques, de matériaux identiques ou différents, par l'intermédiaire d'un métal d'apport dont le point de fusion est nettement inférieur à ceux des matériaux des pièces. Le métal d'apport est amené à l'état liquide et les pièces sont chauffées par le métal d'apport, mais restent solides.

Le brasage-diffusion (diffusion brazing ou transient liquid phase bonding) est de façon générale une opération d'assemblage de deux pièces métalliques analogue au brasage, mais dans laquelle la différence de composition entre le métal d'apport et les pièces à assembler est progressivement résorbée par un traitement thermique de diffusion. Ce traitement conduit à la formation d'une liaison quasi-homogène chimiquement et dont les caractéristiques sont proches de celles des pièces à assembler. Le brasage-diffusion pourrait donc être considéré comme un brasage conventionnel auquel on a adjoint un traitement de diffusion.

Lors de l'assemblage de deux pièces, on utilise un métal d'apport de composition chimique voisine de celle des pièces à assembler, mais ayant une température de fusion plus faible. Au cours du brasage-diffusion, le métal d'apport fond et mouille les surfaces à assembler, puis se solidifie de façon isotherme par diffusion des éléments d'addition du métal d'apport dans le matériau des pièces, dont la composition change et s'homogénéise avec celle du cordon de brasage ainsi formé. Au stade final du brasage-diffusion, le métal d'apport fait corps et est indiscernable du matériau des pièces.

Un tel procédé permet d'effectuer, comme indiqué ci-dessus, l'assemblage de plusieurs pièces tout en conférant aux pièces assemblées et à leurs liaisons des caractéristiques mécaniques et métallurgiques comparables à celles des pièces d'origine. Les températures mises en oeuvre lors d'un tel procédé sont en outre compatibles avec les superalliages classiquement utilisés pour la réalisation de telles pièces, notamment dans le domaine aéronautique.

L'utilisation du brasage-diffusion est notamment limitée par le jeu entre les pièces lors de leur assemblage. En effet, si ce jeu est trop important, la résistance mécanique du joint réalisé par brasage est trop faible pour pouvoir répondre aux spécifications imposées.

Ceci a donc conduit la déposante à développer une amélioration du procédé de brasage-diffusion pour des applications avec des jeux plus importants, de l'ordre de quelques millimètres. Ce procédé fait notamment l'objet du brevet FR 2 511 908, au nom de la Demanderesse, et est utilisable aussi bien pour l'assemblage de pièces, que pour la réparation de fissures, de criques, pour la reconstruction de zones usées ou endommagées en cours de fonctionnement, ou encore pour la modification des sections de passage de gaz sur des distributeurs de turbines en superalliage à base de nickel.

Ce document décrit notamment l'utilisation d'une poudre composite pour l'assemblage par brasage-diffusion d'aubes de turboréacteur en superalliages, formée par mélange d'une poudre d'un métal de base de type Astroloy ou NK17CDAT et d'une poudre d'un métal de brasage-diffusion comprenant du bore, ou du nickel, du chrome et du bore, ou du bore et du silicium. Un exemple fourni dans ce document indique que la poudre comporte en particulier 75 % en poids de poudre d'Astroloy et 25 % en poids de poudre de NiCrB1055.

L'Astroloy (NK17CDAT) est un superalliage à base de nickel qui comporte, en poids, 16,9 % de cobalt, 14,8 % de chrome, 3,87 % d'aluminium, 3,45 % de titane, 5,1 % de molybdène, 0,015 % de carbone. Le NiCrB105 est également un superalliage à base de nickel, qui comporte, en poids, 15 % de chrome et 4% de bore.

Les principes du procédé de rechargement par brasage diffusion sont similaires à ceux de l'assemblage par brasage-diffusion, la particularité résidant dans le fait que le métal d'apport se présente sous la forme d'une poudre composite formée par mélange d'une poudre de métal de base, de composition proche de celle de la pièce à réparer, et d'une poudre de métal de brasage-diffusion, dénommée fondant.

Un objectif de l'invention est d'améliorer les propriétés de la poudre composite connue du document FR 2 511 908, notamment en termes de brasabilité et de fusion.

En outre, certaines pièces qui travaillent dans une ambiance très oxydante et à haute température, comme des pièces de turbine, demandent un traitement spécifique afin de limiter l'oxydation et la corrosion provoquées par les gaz de combustion.

Pour cela, ces pièces qui ont par ailleurs été réparées ou assemblées par brasage-diffusion, sont revêtues par un traitement thermochimique réalisé sous une atmosphère riche en aluminium.

Lors de ce traitement de surface, des effervescences ou des champignons sont créés au niveau des cordons de brasure, et doivent être éliminées par des opérations coûteuses d'enlèvement mécanique.

L'invention a également pour but d'apporter une solution simple, efficace et économique à ce problème.

A cet effet, elle propose une poudre métallique composite pour l'assemblage ou le rechargement par brasage-diffusion de pièces en superalliages, formée par mélange d'une poudre d'un métal de base de type Astroloy et d'une poudre d'un métal de brasage-diffusion de type NiCrB1055, caractérisée en ce qu'elle est exempte de silicium et en ce qu'elle comprend entre 65 et 70 % en poids d'Astroloy et entre 30 et 35 % en poids de NiCrB1055.

L'utilisation d'une poudre composite selon l'invention, en tant que métal d'apport pour le rechargement ou l'assemblage de pièces, ne génère pas d'effervescences ou de champignons lors d'un traitement ultérieur réalisé sous une atmosphère riche en aluminium.

Des études ont montré que ces effervescences ou ces champignons sont évités pour les raisons suivantes.

Dans l'art antérieur, lors du traitement de surface ultérieur, l'aluminium sous forme vapeur diffuse dans les brasures préalablement réalisées lors du rechargement ou de l'assemblage et réagit avec le silicium contenu dans le métal d'apport pour former des composés eutectiques à bas point de fusion. Le point de fusion de ces composés est notamment inférieur à la température à laquelle sont soumises les pièces lors du traitement de surface, de sorte qu'il se produit une fusion de ces composés eutectiques et une formation, après refroidissement, des effervescences ou champignons précités.

Pendant le traitement, il se produit un vidage des phases eutectiques des brasures qui peut aller jusqu'à la formation d'un réseau continu de porosité, ce qui se traduit par l'obtention de joints brasés non étanches avec des porosités ouvertes et une tenue mécanique dégradée.

En particulier, le point de fusion d'un de ces eutectiques est compris entre 600 et 700° C (eutectique à 660° C) alors que la température à laquelle les pièces sont soumises lors du traitement est de l'ordre de 1150° C.

L'utilisation, en tant que métal d'apport, d'une poudre composite ne comportant pas de silicium permet d'éviter la formation de ces composés eutectiques à bas point de fusion et, ainsi, des effervescences ou champignons indésirables.

En outre, la composition particulière de la poudre composite lui confère une meilleure fusion, une meilleure brasabilité et offre de meilleures caractéristiques mécaniques après brasage.

La composition de la poudre composite permet également de remplir tous les interstices entre les grains lors du brasage-diffusion afin d'obtenir au final, un alliage très dense.

Préférentiellement, la poudre composite comprend environ 67,5 % d'Astroloy et 32,5 % en poids de NiCrB1055.

Selon une caractéristique de l'invention, la poudre d'Astroloy et la poudre de NiCrB1055 ont chacune une granulométrie comprise entre 60 et 70 µm, préférentiellement de l'ordre de 63 µm.

Ceci permet d'obtenir une poudre homogène, dense et avec une porosité réduite. Plus une poudre est fine, plus les espaces entre les grains sont petits, et plus la densité de l'alliage obtenu après brasage-diffusion est importante. Toutefois, une poudre fine présente également une surface spécifique importante, ce qui augmente les risques de contamination de la poudre susceptibles de générer des défauts après brasage-diffusion.

Une granulométrie de l'ordre de 63 µm est le meilleur compromis entre une bonne densité et l'apparition de défauts dans l'alliage obtenu.

L'invention porte en outre sur l'utilisation d'une poudre composite du type précité pour l'assemblage ou le rechargement par brasage-diffusion de pièces en superalliage.

De façon avantageuse, les pièces en superalliage sont à base de nickel.

La poudre composite peut être chauffée à une température comprise entre 1180° C et 1200° C, pendant une période comprise entre 5 et 30 min.

De manière préférée, les pièces en superalliage sont des éléments d'une turbomachine, tels par exemple que des secteurs de distributeur à base nickel protégés par aluminisation d'une turbine basse pression ou haute pression.

L'invention sera mieux comprise et d'autres détails, caractéristiques et avantages de l'invention apparaîtront à la lecture de la description suivante faite à titre d'exemple non limitatif en référence aux dessins annexés dans lesquels :

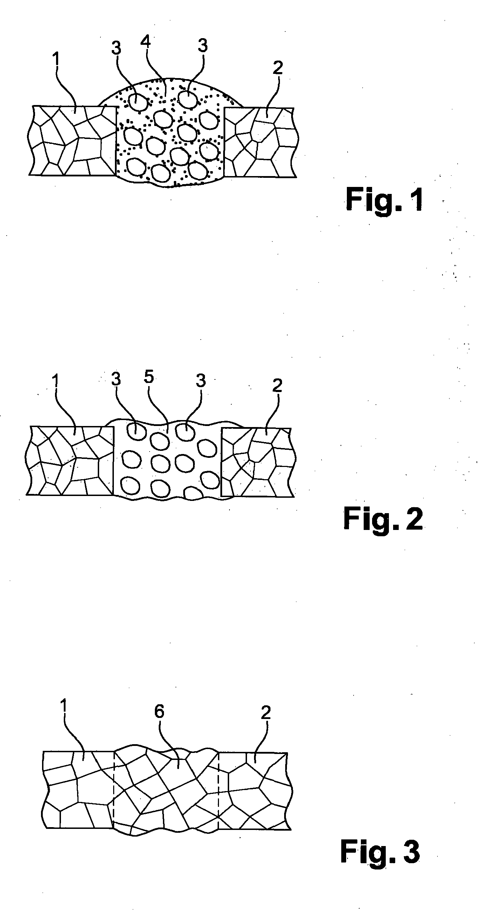

- les figures 1 à 3 sont des vues schématiques illustrant les différentes états physico-chimiques successifs de la zone de brasage de deux pièces, obtenue à l'aide d'une poudre composite selon l'invention.

Les figures 1 à 3 illustrent l'assemblage par brasage-diffusion de deux pièces 1, 2 d'un turboréacteur, par exemple d'une pièce rapportée 1 sur un secteur 2 de distribution de turbine haute pression ou basse pression, la pièce rapportée 1 étant par exemple une chemise de refroidissement, une plaquette d'obturation de circuit ou une douille d'arrivée d'air. Les pièces 1 et 2 en superalliage à base de nickel, sont assemblées à l'aide d'une poudre composite, formée par mélange d'une poudre d'un métal de base 3 de type Astroloy et d'une poudre d'un métal de brasage-diffusion 4 de type NiCrB1055. La poudre composite est exempte de silicium et comprend entre 65 et 70 % en poids d'Astroloy et entre 30 et 35 % en poids de NiCrB1055.

Préférentiellement, la poudre composite comprend environ 67,5 % en poids d'Astroloy et environ 32,5 % en poids de NiCrB1055. La poudre d'Astroloy et la poudre de NiCrB1055 présentent chacune une granulométrie comprise entre 60 et 70 µm, préférentiellement de l'ordre de 63 µm.

Les surfaces des pièces 1, 2 à assembler sont préparées, de manière à retirer la couche superficielle contaminée. Cette préparation est notamment décrite dans le document EP 0 974 418.

La poudre composite est ensuite déposée entre deux surfaces des pièces 1, 2 à assembler, puis chauffée.

Plus particulièrement, le brasage-diffusion peut comprendre une montée en température d'environ 3 heures à 1200 °C, un premier palier de 12 minutes à 1200° C, suivi d'un second palier de 2 heures à 1150° C, puis une baisse de température d'environ 2 heures de 1150° C à 20° C.

Lors du brasage-diffusion, les grains de la poudre de brasage-diffusion (NiCrB1055) 4 fondent en premier. La phase liquide 5 à laquelle ils ont donné naissance est retenue par capillarité et mouille les surfaces des pièces 1, 2 et les grains de la poudre de base (Astroloy) 3, comme représenté à la figure 2.

Après refroidissement, une couche intermédiaire solide 6 est formée entre les deux pièces 1, 2, dont la structure métallographique est homogène et est liée par diffusion aux surfaces des pièces 1, 2 (figure 3).

## Revendications

1. Poudre métallique composite pour l'assemblage ou le rechargement par brasage-diffusion de pièces (1, 2) en superalliages, formée par mélange d'une poudre d'un métal de base (3) de type Astroloy et d'une poudre d'un métal de brasage-diffusion (4) de type NiCrB1055, **caractérisée en ce qu'**elle est exempte de silicium et **en ce qu'**elle comprend entre 65 et 70 % en poids d'Astroloy et entre 30 et 35 % en poids de NiCrB1055, dans lequel la poudre d'Asroloy et la poudre de NiCrB1055 ont chacune une granulométrie comprise entre 60 et 70 µm, préférentiellement de l'ordre de 63 µm.

2. Poudre composite selon la revendication 1, **caractérisée en ce qu'**elle comprend environ 67,5 % en poids d'Astroloy et environ 32,5 % en poids de NiCrB1055.

3. Utilisation d'une poudre composite selon l'une des revendications 1 à 3 pour l'assemblage ou le rechargement par brasage-diffusion de pièces (1, 2) en superalliage.

4. Utilisation selon la revendication 4, **caractérisée en ce que** les pièces (1, 2) en superalliage sont à base de nickel.

5. Utilisation selon la revendication 4 ou 5, **caractérisée en ce que** la poudre composite est chauffée à une température comprise entre 1180° C et 1200° C pendant une période comprise entre 5 et 30 min.

6. Utilisation selon l'une des revendications 4 à 6, **caractérisée en ce que** les pièces (1, 2) en superalliage sont des éléments d'une turbomachine, tels par exemple que des pièces rapportées sur des secteurs de distributeur à base nickel protégés par aluminisation d'une turbine basse pression ou haute pression.

## Patentansprüche

1. Metallisches Verbundpulver zur Montage oder Erneuerung durch Diffusionsschweißung von aus Superlegierungen hergestellten Teilen (1, 2), das durch Mischen eines Pulvers aus einem Basismetall (3) vom Typ Astroloy und eines Pulver aus einem Metall zum Diffusionsschweißen (4) vom Typ NiCrB1055 gebildet ist, **dadurch gekennzeichnet, dass** es frei von Silicium ist und dass es zwischen 65 und 70 Gew.-% Astroloy und zwischen 30 und 35 Gew.-% NiCrB1055 enthält, wobei das Astroloy-Pulver und das NiCrB 1055-Pulver jeweils eine Korngröße zwischen 60 und 70 µm, vorzugsweise in der Größenordnung von 63 µm haben.

2. Verbundpulver nach Anspruch 1, **dadurch gekennzeichnet, dass** es etwa 67,5 Gew.-% Astroloy und etwa 32,5 Gew.-% NiCrB1055 enthält.

3. Verwendung eines Verbundpulvers nach der Ansprüche 1 oder 2 zur Montage oder Erneuerung durch Diffusionsschweißung von aus Superlegierungen hergestellten Teilen (1,2).

4. Verwendung nach Anspruch 3, **dadurch gekennzeichnet, dass** die aus Superlegierung hergestellten Teile (1, 2) auf Basis von Nickel bestehen.

5. Verwendung nach Anspruch 3 oder 4, **dadurch gekennzeichnet, dass** das Verbundpulver auf eine Temperatur zwischen 1180 °C und 1200 °C für eine Zeitdauer zwischen 5 und 30 min. erhitzt wird.

6. Verwendung nach einem der Ansprüche 3 bis 5, **dadurch gekennzeichnet, dass** die aus Superlegierung hergestellten Teile (1, 2) Elemente einer Turbomaschine bzw. eines Turbotriebwerks sind, wie beispielsweise Teile, die an die durch Aluminisierung geschützten Leitapparat-Sektoren auf Nickelbasis einer Niederdruck- oder Hochdruckturbine angesetzt sind.

## Claims

1. A composite metal powder for diffusion-brazing assembly or resurfacing of parts (1, 2) made of superalloy, the powder being formed by mixing a powder (3) of an Astroloy type base metal with a powder (4) of an NiCrB1055 type diffusion-brazing metal, the powder being **characterized in that** it is free of silicon and **in that** it comprises in the range 65% to 70% by weight of Astroloy and in the range 30% to 35% by weight of NiCrB1055, wherein both the Astroloy powder and the NiCrB1055 powder present grain size lying in the range 60 µm to 70 µm, and preferably of the order of 63 µm.

2. A composite powder according to claim 1, **characterized in that** it comprises about 67.5% by weight of Astroloy and about 32.5% by weight of NiCrB1055.

3. The use of a composite powder according to claim 1 or 2, for diffusion-brazing assembly or resurfacing of superalloy parts (1, 2).

4. A use according to claim 3, **characterized in that** the superalloy parts (1, 2) are nickel-based.

5. A use according to claim 3 or claim 4, **characterized in that** the composite powder is heated to a temperature lying in the range 1180°C to 1200°C for a period lying in the range 5 min to 30 min.

6. A use according to any one of claims 3 to 5, **characterized in that** the superalloy parts (1, 2) are elements of a turbine engine, e.g. nickel-based parts fitted on nozzle sectors and protected by aluminization for a low-pressure or high-pressure turbine.
